# EUROPEAN PATENT APPLICATION

(11) **EP 4 576 951 A1**
(43) Date of publication of application: **25.06.2025**
(21) Application number: 23868594.5
(22) Date of filing: 20.09.2023
(51) Int. Cl.: H05K 5/00, B32B 27/08, B32B 7/023, B29C 45/37, B29C 45/14, B29C 45/00, B29D 11/00, B29L 31/34

(54) **ELECTRONIC DEVICE COMPRISING HOUSING, AND METHOD AND APPARATUS FOR MANUFACTURING SAME**

(30) Priority: 20.09.2022 KR 20220118883; 24.10.2022 KR 20220137663
(71) Applicant: Samsung Electronics Co., Ltd., Suwon-si, Gyeonggi-do 16677 (KR)
(72) Inventor: HWANG, Hangyu, Suwon-si, Gyeonggi-do 16677 (KR); KIM, Changsu, Suwon-si, Gyeonggi-do 16677 (KR); NA, Sangsik, Suwon-si, Gyeonggi-do 16677 (KR)
(74) Representative: Gulde & Partner
(86) International application number: PCT/KR2023/014304
(87) International publication number: WO 2024/063542

(57) **Abstract**

An electronic device comprising a housing is disclosed. The electronic device according to various embodiments of the present invention comprises a housing, wherein the housing may comprise: a substrate layer which has a 3D shape including at least one protrusion; and a film layer which is disposed on a surface of the substrate layer, facing the outside of the electronic device, and has a higher hardness than the substrate layer, and the hard film layer may comprise a first optical pattern formed on a first surface facing a first direction which is the inward direction of the electronic device.

## Description

### [Technical Field]

Various embodiments disclosed herein relate to an electronic device and, more specifically, to an electronic device including a housing.

### [Background Art]

An electronic device includes a housing configured to protect an internal component of an electronic device from impact or foreign matter from outside the device. In addition, the housing of an electronic device may affect the appearance of the electronic device. Recently, various three-dimensional curved shapes have been introduced to the rear plate of the housing to improve the aesthetics of the electronic device. Additionally, in order to improve the aesthetics of the electronic device, there is an increasing trend to introduce various optical structures into the housing and utilize optical phenomena such as diffraction and refraction.

The material of a housing may include an inorganic material such as metal, glass, or ceramic and/or an organic material such as polymer. A polymer material is less electrically conductive than metal, making it easier for radio waves to pass therethrough, and has higher impact toughness than a material such as glass or ceramics, and thus has the advantage of being prevented from being easily damaged by an external impact. An electronic device housing made of a polymer material may be manufactured in a manner such as pressing a high-hardness polymer plate into a mold. In addition, paint and/or a hard coating liquid may be applied to the surface of an injection molded polymer material to improve an optical effect and surface hardness.

### [Disclosure of Invention]

### [Technical Solution]

When a high-hardness polymer plate is molded using a method such as a press to have a three-dimensional curved shape, the risk of a defect such as a surface crack increases due to the lack of ductility of a polymer material. In addition, when manufacturing a housing with ductile polymer material and applying paint or hard coating solution to the surface thereof, there is a risk of a defect occurring due to clumping of the coating solution in some areas of the housing of an electronic device, the housing having a three-dimensional curved shape due to differences in wetting characteristics. In addition, it may be difficult to manufacture an optical structure having various optical effects using this manufacturing method.

Various embodiments disclosed herein may provide an electronic device having improved surface quality, a three-dimensional curved shape, and various optical effects, and a method and an apparatus for manufacturing same.

An electronic device according to various embodiments of the disclosure may include a housing, wherein the housing includes a substrate layer having a 3D shape including at least one protrusion, and a film layer located on a surface of the substrate layer facing the outside of the electronic device and having a higher hardness compared to the substrate layer, and the hard film layer includes a first optical pattern formed on a first surface facing a first direction which is an internal direction of the electronic device.

In various embodiments, the hardness of the film layer may be HB or higher.

In various embodiments, the substrate layer may include a second optical pattern formed on a second surface of the substrate layer facing the first direction.

In various embodiments, the substrate layer may include a transparent polymer material.

In various embodiments, the housing may include a rear surface shielding layer located in a first direction with respect to the second surface of the substrate layer and having an optically opaque material.

In various embodiments, the first optical pattern and the second optical pattern may be different from each other.

In various embodiments, the substrate layer may be manufactured by injecting a polymer into a mold,
the mold may include a second mold pattern formed on a surface of the mold corresponding to the second surface of the substrate layer and having a negative shape of the second optical pattern,
and the second optical pattern of the substrate layer may be formed by injecting a polymer into the mold including the second mold pattern.

In various embodiments, the housing may include a resin layer positioned between the film layer and the substrate layer.

In various embodiments, the refractive index of the resin layer may be different from the refractive index of the film layer.

A method for manufacturing a housing of an electronic device according to various embodiments of the disclosure may include
a film patterning step of forming a first optical pattern on a first side facing a first direction of the film layer, a forming step of forming the film layer into a three-dimensional shape, an insert step of seating the film layer in an injection mold, and an injecting step of forming a substrate layer bonded to the film layer by injecting a resin into the injection mold.

In various embodiments, the film patterning step may include a step of forming the first optical pattern on the first surface of the film layer by press-fitting the first surface of the film layer with a first roll of which the surface has a roll pattern having a negative shape of the first optical pattern.

In various embodiments, the film patterning step may include a step in which resin is applied on a film mold on which a first mold pattern having a negative shape of the first optical pattern is formed, and the resin is cured while the film layer is seated on the film mold, thereby forming the first optical pattern on the surface of the film layer.

In various embodiments, the resin may be a UV curable resin.

In various embodiments, the forming step may be performed prior to the film patterning step, and the film patterning step may be a step in which resin is applied to a film mold which has a shape corresponding to the three-dimensional shape and is in contact with the first surface of the film layer, and the film layer having completed the forming step is seated in the film mold so that the resin is cured to form the first optical pattern.

In various embodiments, the injection step may be configured to form a second optical pattern on a second surface of the substrate layer, the second surface facing the first direction.

In various embodiments, the injection mold may include a first mold having a film seating portion on which a surface opposite to the first surface of the film layer is seated, and a second mold including a second mold pattern having a negative shape of the second pattern.

In various embodiments, the second mold pattern may be configured such that the second optical pattern has a pattern different from the first optical pattern.

In various embodiments, the polymer may include a transparent polymer material.

In various embodiments, after the injection step, a rear surface shielding step of applying an opaque material on the surface of the substrate layer facing the first direction may be performed.

A manufacturing apparatus according to various embodiments of the disclosure may include a substrate layer having a three-dimensional shape including at least one protrusion, and a film layer located on the surface of the substrate layer facing the outside of the electronic device and having a higher hardness compared to the substrate layer. The manufacturing apparatus may be an apparatus for manufacturing a housing of an electronic device, wherein the hard film layer includes a first optical pattern formed on a first surface facing a first direction which is an internal direction of the electronic device, and the substrate layer includes a second optical pattern formed on a second surface of the substrate layer facing the first direction. The manufacturing apparatus may include a first mold having a film seating portion on which a surface opposite to the first surface of the film layer is seated, and a second mold including a second mold pattern having a negative shape of the second pattern.

In an electronic device according to various embodiments disclosed herein, a housing of the electronic device is manufactured by injection molding a substrate layer after a high hardness film layer on which an optical pattern is formed and which is formed to have a three-dimensional shape has been seated in an injection mold.

### [Brief Description of Drawings]

With regard to the description of the drawings, the same or like reference signs may be used to designate the same or like elements.
FIG. 1 is a block diagram illustrating an electronic device in a network environment according to various embodiments.
FIG. 2 is a perspective view of the front surface of a mobile electronic device according to various embodiments disclosed herein;
FIG. 3 is a perspective view of the rear surface of the electronic device illustrated in FIG. 2;
FIG. 4 is an exploded perspective view of the electronic device illustrated in FIG. 2;
FIG. 5A is a perspective view showing a plate of a housing of an electronic device according to various embodiments of the disclosure;
FIG. 5B is a cross-sectional view showing a plate of a housing of an electronic device according to various embodiments of the disclosure;
FIG. 6A is a schematic diagram showing a manufacturing process of a housing plate according to various embodiments;
FIG. 6B is a flowchart showing a manufacturing process of a housing plate according to various embodiments;
FIGS. 7A and 7B are schematic diagrams showing a film patterning step according to various embodiments;
FIG. 8 is a schematic diagram showing a forming step of a film layer according to various embodiments;
FIG. 9 is a schematic diagram showing a film patterning step according to an embodiment of the disclosure;
FIG. 10 is a schematic diagram showing an insert step and an injection step according to various embodiments of the disclosure; and
FIG. 11 is a plan view showing various optical effects that can be applied to a housing plate of an electronic device according to various embodiments.

### [Mode for the Invention]

Hereinafter, exemplary embodiments of the disclosure will be described in detail in conjunction with the accompanying drawings. In the drawings, for example, the sizes and shapes of members may be exaggerated for the sake of descriptive convenience and clarity, and when actually implemented, the illustrated shapes may be modified. Therefore, the embodiment of the disclosure should not be construed to be limited to particular shapes of parts described and shown in the specification.

Throughout the drawings, the same or like reference numerals designate the same or like elements. As used in the specification, the term "and/or" includes any one of items enumerated and all combinations of one or more thereof.

Embodiments of the disclosure are provided to more completely explain the disclosure to those skilled in the art to which the disclosure pertains, various changes and modification in form may be made to the embodiments as described below, and the scope of the disclosure is not limited thereto. Rather, these embodiments are presented to more fully and completely describe the disclosure and completely transfer the idea of the disclosure to those skilled in the art.

The terms used in the specification are used to describe embodiments, and are not intended to limit the scope of the disclosure. Although expressed in a singular form, the singular form may include a plural form unless definitely indicated in the context. As used herein, the term "comprise" or "comprising" is intended to specify the existence of mentioned shapes, numbers, steps, operations, elements, components, and/or groups thereof, and does not preclude the possible existence or addition of other shapes, numbers, steps, operations, elements, components, and/or groups thereof. Also, it will be appreciated to those skilled in the art that a structure or shape disposed "adjacent to" any other shape may have a portion overlapping the other shape or disposed under the other shape.

In the specification, relative terms such as "below", "above", "upper", "lower", "horizontal", and "vertical" may be used to describe the relationship between one element, layer, or area and any other element, layer, or area. It should be appreciated that, in addition to the directions illustrated in the drawings, these terms also include other directions.

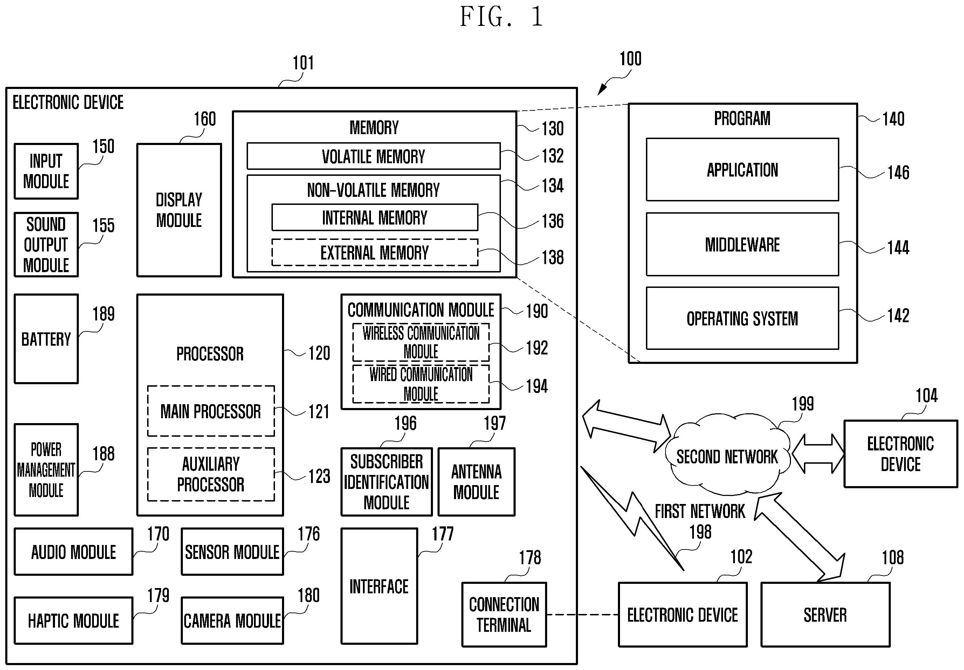

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, a portable electronic device (e.g., the electronic device 101 of FIG. 1) may have a foldable housing that is divided into two housings around a folding axis. A first portion of a display (e.g., a flexible display) may be disposed in a first housing, and a second portion of the display may be disposed in a second housing. The foldable housing may be implemented in an in-folding manner in which the first portion and the second portion face each other when the portable electronic device is folded. Alternatively, the foldable housing may be implemented in an out-folding manner in which the first portion and the second portion face opposite to each other when the portable electronic device is folded. The surface on which the first portion and the second portion of the display are disposed may be defined as a front surface of the portable electronic device, the opposite surface may be defined as a rear surface of the portable electronic device, and a surface surrounding a space between the front surface and the rear surface may be defined as a side surface of the portable electronic device.

According to an embodiment mentioned herein, when a display of a portable electronic device is folded, an in-folding case in which a first portion of the display in a first housing is disposed to face a second portion of the display in a second housing has been shown and explained as an example. However, according to an embodiment, when the display is folded, the same may be applied in an out-folding case in which the first portion of the display in the first housing 210 is disposed to face the opposite direction to the second portion of the display in the second housing. In addition, embodiments may also be applied to multi-foldable electronic devices in which in-folding and in-folding are combined, in-folding and out-folding are combined, and out-folding and out-folding are combined.

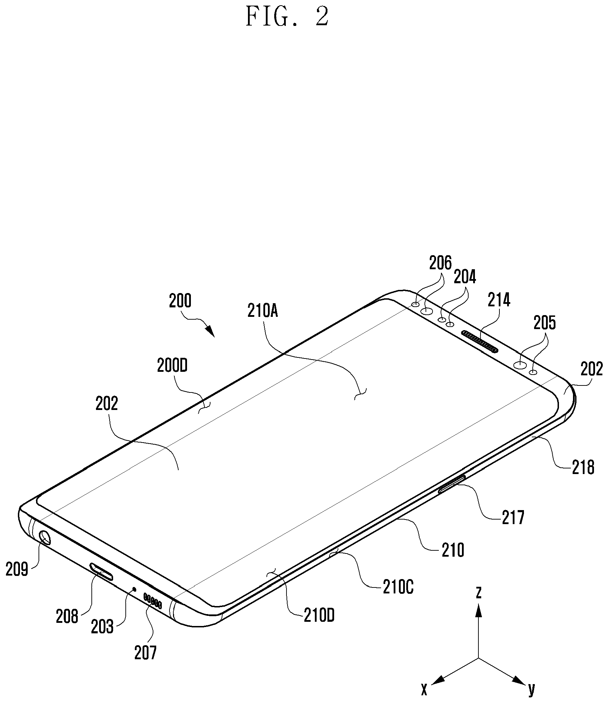

FIG. 2 is a perspective view of a front surface of an electronic device 200 according to various embodiments disclosed herein.

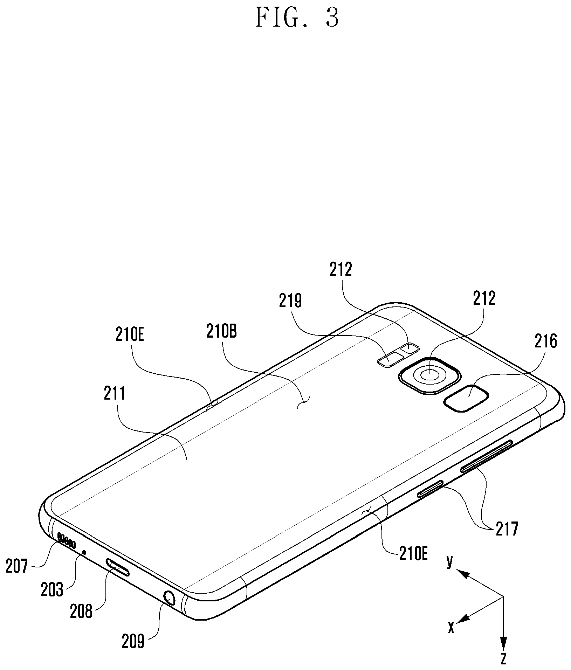

FIG. 3 is a perspective view of a rear surface of the electronic device 200 illustrated in FIG. 2.

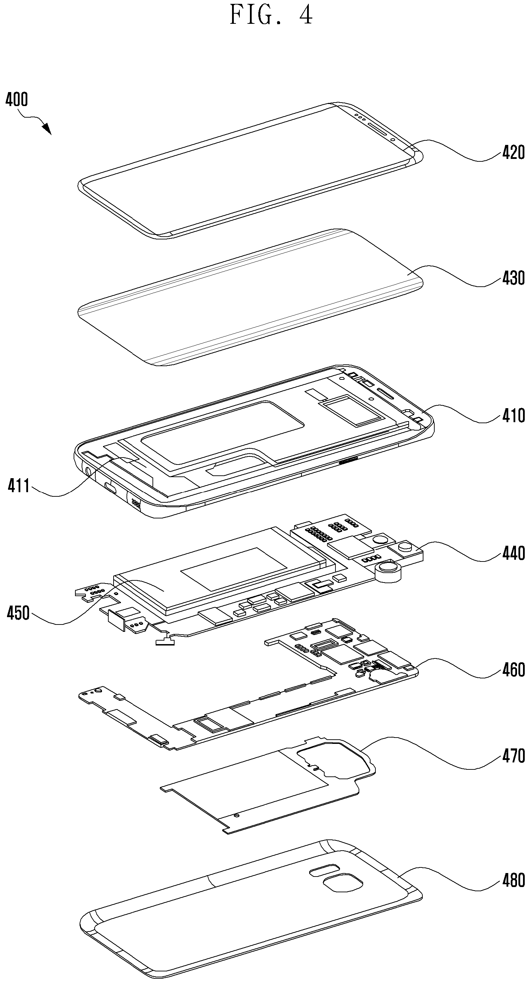

FIG. 4 is an exploded perspective view of the electronic device 400 illustrated in FIG. 2.

Referring to FIGS. 2 and 3, an electronic device 200 (e.g., the electronic device 101 of FIG. 1) according to an embodiment may include a housing 210 including a first surface (or a front surface) 210A, a second surface (or a rear surface) 210B, and a side surface 210C surrounding a space between the first surface 210A and the second surface 210B. In an embodiment (not shown), the housing may refer to a structure that forms a portion of the first surface 210A, the second surface 210B, and the side surface 210C of FIG. 2. According to an embodiment, the first surface 210A may be formed by a front plate 202 (e.g., a glass plate including various coating layers, or a polymer plate) that is at least partially transparent. The second surface 210B may be formed by a rear plate 211 that is substantially opaque. The rear plate 211 may be formed, for example, by coated or colored glass, ceramic, polymer, metal (e.g., aluminum, stainless steel (STS), or magnesium), or a combination of at least two of the above materials. The side surface 210C may be coupled with the front plate 202 and the rear plate 211 and may be formed by a side bezel structure (or "a side member") 218 including metal and/or polymer. In an embodiment, the rear plate 211 and the side bezel structure 218 may be formed integrally and may include the same material (e.g., a metal material such as aluminum).

In the illustrated embodiment, the front plate 202 may include two first regions 210D that are curved and seamlessly extending from the first surface 210A toward the rear plate 211, at both ends of a long edge of the front plate 202. In the illustrated embodiment (see FIG. 3), the rear plate 211 may include two second regions 210E that are curved and seamlessly extending from the second surface 210B toward the front plate 202, at both ends of the long edge. In an embodiment, the front plate 202 (or the rear plate 211) may include only one of the first regions 210D (or the second regions 210E). In an embodiment, a portion of the first regions 210D or the second regions 210E may not be included. In the above embodiments, when viewed from the side surface of the electronic device 200, the side bezel structure 218 may have a first thickness (or width) on the side that does not include the first regions 210D or the second regions 210E described above, and may have a second thickness that is thinner than the first thickness on the side including the first regions 210D or the second regions 210E.

According to an embodiment, the electronic device 200 may include at least one of a display 201, audio modules 203, 207, and 214, sensor modules 204, 216, and 219, camera modules 205, 212, and 213, key input devices 217, a light-emitting element 206, and connector holes 208 and 209. In an embodiment, the electronic device 200 may omit at least one of the components (e.g., the key input devices 217 or the light-emitting element 206) or may additionally include other components.

The display 201 may be visually exposed, for example, through a considerable portion of the front plate 202. In an embodiment, at least a portion of the display 201 may be visually exposed through the first surface 210A and the front plate 202 forming the first regions 210D of the side surface 210C. In an embodiment, the edges of the display 201 may be formed to be substantially the same as the adjacent outer shape of the front plate 202. In an embodiment (not shown), in order to expand the area through which the display 201 is exposed, the distance between the outer edge of the display 201 and the outer edge of the front plate 202 may be formed to be substantially the same.

In an embodiment (not shown), a recess or an opening may be formed in a portion of the screen display area of the display 201, and the electronic device may include at least one of an audio module 214, a sensor module 204, a camera module 205, and a light-emitting element 206 aligned with the recess or the opening. In an embodiment (not shown), on the rear surface of the screen display area of the display 201, the electronic device may include at least one of the audio module 214, the sensor module 204, the camera module 205, a fingerprint sensor 216, and the light-emitting element 206. In an embodiment (not shown), the display 201 may be coupled to or disposed adjacent to a touch detection circuit, a pressure sensor capable of measuring the intensity (pressure) of touch, and/or a digitizer configured to detect a magnetic field-type stylus pen. In an embodiment, at least a portion of the sensor modules 204 and 219 and/or at least a portion of the key input devices 217 may be disposed in the first regions 210D and/or the second regions 210E.

The audio modules 203, 207, and 214 may include a microphone hole 203 and speaker holes 207 and 214. The microphone hole 203 may have a microphone disposed therein to acquire external sounds, and in an embodiment, a plurality of microphones may be disposed to detect the direction of sound. The speaker holes 207 and 214 may include an external speaker hole 207 and a phone call receiver hole 214. In an embodiment, the speaker holes 207 and 214 and the microphone hole 203 may be implemented as one hole, or a speaker may be included without the speaker holes 207 and 214 (e.g., a piezo speaker).

The sensor modules 204, 216, and 219 may produce electrical signals or data values corresponding to the internal operating state of the electronic device 200 or the external environmental state. The sensor modules 204, 216, and 219 may include, for example, a first sensor module 204 (e.g., a proximity sensor) and/or a second sensor module (not shown) (e.g., a fingerprint sensor) disposed on the first surface 210A of the housing 210, and/or a third sensor module 219 (e.g., an HRM sensor) and/or a fourth sensor module 216 (e.g. a fingerprint sensor) disposed on the second surface 210B of the housing 210. The fingerprint sensor may be disposed on the second surface 210B as well as the first surface 210A (e.g., the display 201) of the housing 210. The electronic device 200 may further include at least one of sensor modules not shown, for example, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212, and 213 may include a first camera device 205 disposed on the first surface 210A of the electronic device 200, and a second camera device 212 disposed on the second surface 210B, and/or a flash 213. The camera devices 205 and 212 may include one or more lenses, an image sensor, and/or an image signal processor. The flash 213 may include, for example, a light emitting diode or a xenon lamp. In an embodiment, two or more lenses (an infrared camera, a wide-angle lens, and a telephoto lens) and image sensors may be arranged in the electronic device 200.

The key input devices 217 may be arranged on the side surface 210C of the housing 210. In an embodiment, the electronic device 200 may not include some or all of the key input devices 217 mentioned above, and the key input devices 217 that are not included may be implemented in another form such as a soft key on the display 201. In an embodiment, the key input devices may include a sensor module 216 disposed on the second surface 210B of the housing 210.

The light-emitting element 206 may be disposed, for example, on the first surface 210A of the housing 210. For example, the light-emitting element 206 may provide status information of the electronic device 200 in the form of light. In an embodiment, the light-emitting element 206 may provide, for example, a light source linked to the operation of the camera module 205. The light-emitting element 206 may include, for example, an LED, an IR LED, and a xenon lamp.

The connector holes 208 and 209 may include a first connector hole 208 capable of receiving a connector (e.g., a USB connector) configured to transmit and receive power and/or data with an external electronic device, and/or a second connector hole (e.g., an earphone jack) 209 that can accommodate a connector configured to transmit and receive audio signals with an external electronic device.

Referring to FIG. 4, an electronic device 400 (e.g., the electronic device 101 in FIG. 1 and the electronic device 200 in FIGS. 2 and 3) may include a side bezel structure 410, a first support member 411 (e.g., a bracket), a front plate 420, a display 430, a printed circuit board 440, a battery 450, a second support member 460 (e.g. a rear case), an antenna 470, and a rear plate 480. In an embodiment, the electronic device 400 may omit at least one of the components (e.g., the first support member 411 or the second support member 460) or may additionally include other components. At least one of the components of the electronic device 400 may be the same as or similar to at least one of the components of the electronic device 200 of FIG. 2 or 3, and overlapping descriptions will be omitted below.

The first support member 411 may be disposed inside the electronic device 400 and connected to the side bezel structure 410, or may be formed integrally with the side bezel structure 410. The first support member 411 may be formed of, for example, a metallic material and/or a non-metallic (e.g., polymer) material. The first support member 411 may have one surface coupled to the display 430 and the other surface coupled to the printed circuit board 440. The printed circuit board 440 may be equipped with a processor, a memory, and/or an interface. The processor may include, for example, one or more of a central processing unit, an application processor, a graphics processing unit, an image signal processor, a sensor hub processor, or a communication processor.

The memory may include, for example, a volatile memory or a non-volatile memory.

The interface may include, for example, a high definition multimedia interface (HDMI), a universal serial bus (USB) interface, an SD card interface, and/or an audio interface. For example, the interface may connect the electronic device 400 to an external electronic device electrically or physically and may include a USB connector, an SD card/MMC connector, or an audio connector.

The battery 450 may be a device configured to supply power to at least one component of the electronic device 400 and may include, for example, a non-rechargeable primary battery, a rechargeable secondary battery, or a fuel cell. At least a portion of the battery 450 may be disposed, for example, on substantially the same plane as the printed circuit board 440. The battery 450 may be integrally disposed inside the electronic device 400, or may be disposed detachably from the electronic device 400.

The antenna 470 may be disposed between the rear plate 480 and the battery 450. The antenna 470 may include, for example, a near field communication (NFC) antenna, a wireless charging antenna, and/or a magnetic secure transmission (MST) antenna. The antenna 470, for example, may perform short-distance communication with an external device or wirelessly transmit and receive power required for charging. In an embodiment, an antenna structure may be formed by a portion or a combination of the side bezel structure 410 and/or the first support member 411.

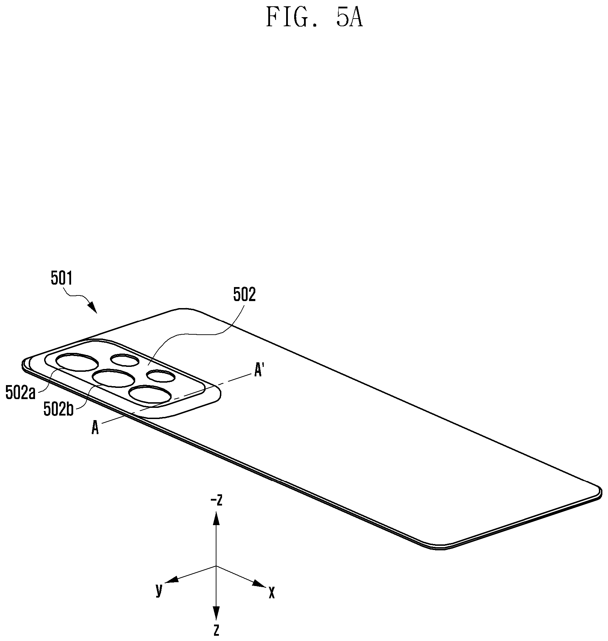

FIG. 5A is a perspective view showing a plate of a housing of an electronic device according to various embodiments of the disclosure.

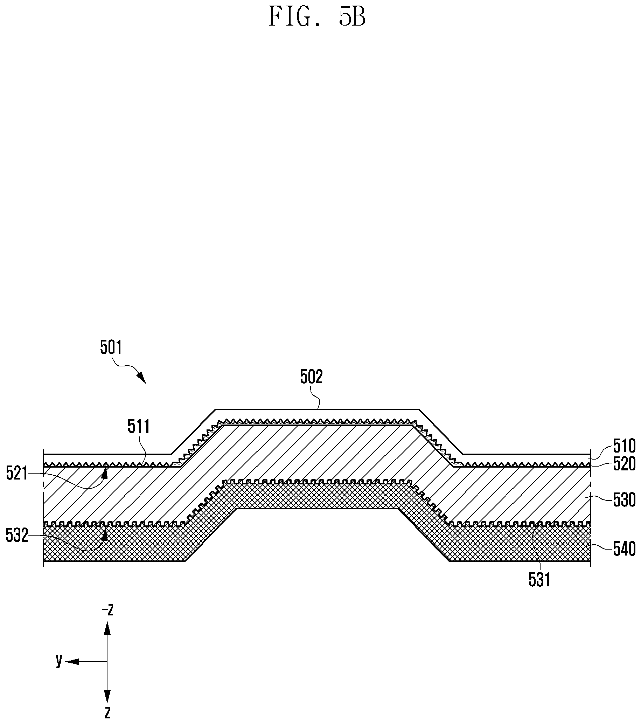

FIG. 5B is a cross-sectional view showing a plate of a housing of an electronic device according to various embodiments of the disclosure.

The cross section in FIG. 5B is a cross section taken along the A-A' direction of FIG. 5A.

Referring to FIG. 5A, a housing (e.g., the housing 210 of FIGS. 2 and 3) of an electronic device (e.g., the electronic device 101 of FIG. 1, the electronic device 200 of FIGS. 2 and 3, and the electronic device 400 of FIG. 4) may include a housing plate 501 (e.g., the rear plate 480 in FIG. 4). The housing plate 501 may be a member that covers the surface of the electronic device, for example, the rear surface of the electronic device, and protects the internal components of the electronic device from external impacts and inflow of foreign substances. The housing plate 501 may include a protrusion part 502 configured to accommodate at least some of the components, such as camera modules (e.g., the camera module 180 in FIG. 1 and the camera modules 205, 212, and 213 in FIGS. 2 and 3) that protrude toward the outside of the electronic device (e.g., -z direction) and configured to enhance the design of the electronic device. The protrusion part 502 may be provided with, for example, at least one opening (502a, 502b) for a camera module.

Referring to FIG. 5B, the housing plate 501 may include a film layer 510 and a substrate layer 530.

The film layer 510 may be a layer that is located on the outer side of the electronic device in the housing plate 501 and is configured to protect the surface of the housing plate 501 and the electronic device from damage such as scratches. In some embodiments, the hardness of the film layer 510 may be HB or higher based on pencil hardness. The material of the film layer 510 may include various high-hardness polymer materials, such as PET, PC, PMMA, PC-PMMA, and/or PI. A first optical pattern 511 may be formed on the surface of the film layer 510. For example, the first optical pattern 511 may be formed on the surface of the film layer 510, for example, the first surface 512, which faces the first direction (e.g., z direction), which is the internal direction of the electronic device. The first optical pattern 511 may be an embossed or engraved pattern that repeats with a constant or changing period, and may be a pattern that causes a distortion effect, an iridescent effect, a 3D effect, and/or similar optical effects due to diffraction, reflection, and/or refraction. For example, the first optical pattern 511 may include, for example, a diffraction grating pattern, a microprism pattern, a Fresnel lens, a lenticular lens, and/or similar optical patterns. The first optical pattern 511 can give a unique aesthetic to the appearance of the electronic device through optical effects.

In an embodiment, the film layer 510 may have higher hardness than the substrate layer 530 described later. In various embodiments, the film layer 510, which has a higher hardness than the substrate layer 530, may be described as a hard film layer 510.

The substrate layer 530 may be a layer configured to protect the inside of the electronic device by providing mechanical rigidity to the housing plate 501 and absorbing shock applied to the electronic device from the outside. In various embodiments, the substrate layer 530 may be made of a polymer material having impact resistance and ductility. The material of the substrate layer 530 may be a polymer material having a hardness of 3B or lower on the pencil hardness scale. For example, the polymer material of the substrate layer 530 may include materials such as nylon, MC nylon, PC, ABS, and/or PMMA.

In various embodiments, a second optical pattern 531 may be formed on the surface of the substrate layer 530. The second optical pattern 531 may be formed on the second surface 532, which is the surface of the base layer facing the first direction (e.g., z direction) which is the internal direction of the electronic device. The second optical pattern 531 may be an embossed or engraved pattern that repeats with a constant or changing period, and may be a pattern that causes a distortion effect, an iridescent effect, a 3D effect, and/or similar optical effects due to diffraction, reflection, and/or refraction. For example, the second optical pattern 531 may include, for example, a diffraction grating pattern, a microprism pattern, a Fresnel lens, a lenticular lens, and/or similar optical patterns. In various embodiments, the second optical pattern 531 may be a different pattern from the first optical pattern 511 in terms of pattern type, shape, spacing, etc.

In some embodiments, the second optical pattern 531 may interact with light passing through the first optical pattern 511 to produce complex optical effects. For example, the optical pattern or image formed by the second optical pattern 531 may be viewed to overlap behind the optical pattern formed by the first optical pattern 511. In addition, the optical pattern or image formed from either the first optical pattern or the second optical pattern 531 may vary depending on the viewing angle or may produce a sense of volume or sense of depth due to interaction with the other one of the first optical pattern or the second optical pattern 531. This may give a unique aesthetic to the exterior of the electronic device.

In some embodiments, the material of the substrate layer 530 may include a transparent polymer material. The transparent polymer material may allow light having passed through the first optical pattern 511 to hit the second optical pattern 531 and/or light from the second optical pattern 531 to interact with the first optical pattern 511.

In various embodiments, the housing plate 501 may include a rear shielding layer 540 located in the internal direction (e.g., z direction) of the electronic device with respect to the substrate layer 530. The rear shielding layer 540 may include an optically opaque material. In some embodiments, the rear shielding layer 540 may include an opaque reflective material, such as a thin metal film. The rear shielding layer 540 may prevent the light having passed through the film layer 510 and the substrate layer 530 from being introduced into the electronic device or may prevent the light from passing through the housing plate 501 and showing through the interior of the electronic device.

In various embodiments, a resin layer 520 may be located between the film layer 510 and the substrate layer 530. In various embodiments, the resin layer 520 may be a layer that bonds the film layer 510 and the substrate layer 530. In various embodiments, the resin layer 520 may be a layer that fills the unevenness formed by the first optical pattern 511 of the film layer 510. For example, the resin layer 520 may act as an optical interface between the film layer 510 and the substrate layer 530.

In some embodiments, the resin layer 520 may have a refractive index different from that of the film layer 510. By having a refractive index different from that of the film layer 510, the resin layer 520 may enhance optical effects, such as diffraction, total reflection, and refraction, caused by the first optical pattern 511.

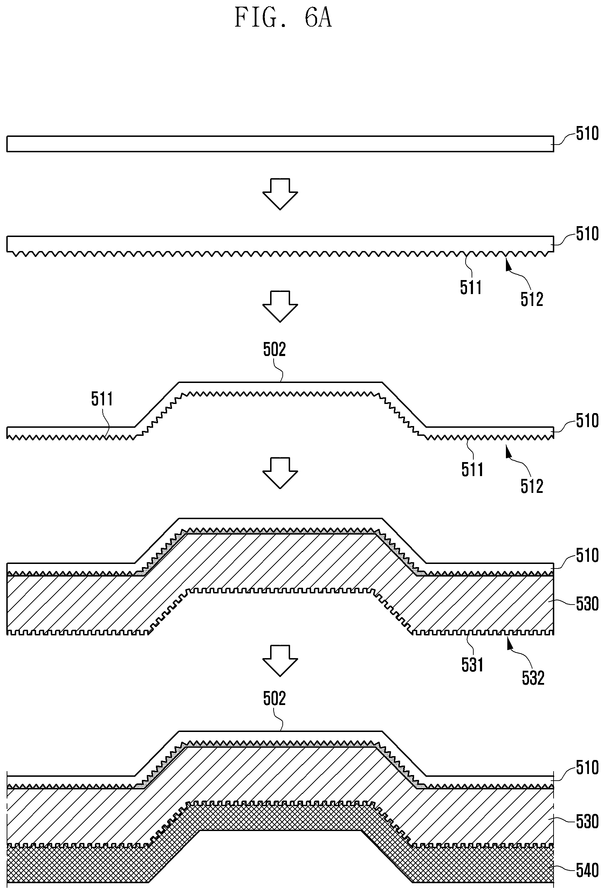

FIG. 6A is a schematic diagram showing a manufacturing process of a housing plate 501 according to various embodiments.

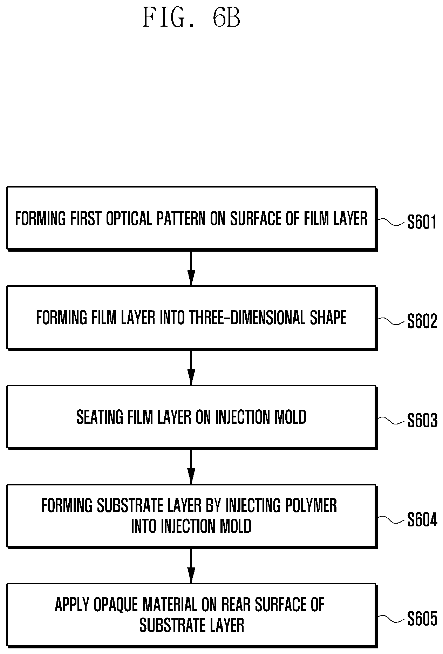

FIG. 6B is a flowchart showing a manufacturing process of a housing plate 501 according to various embodiments.

Referring to FIGS. 6A and 6B, the housing plate 501 may be manufactured by a method including a film patterning step S601, a forming step S602, an insert step S603, and an injection step S604.

The film patterning step S601 may be a step of forming a first optical pattern 511 on a first surface 512 of a film layer 510. The forming step S602 may be a step of forming the film layer 510 into a shape that corresponds to the three-dimensional shape of a housing having a protrusion part 502. The insert step S603 may be a step of seating the film layer 510 formed into an injection mold having a shape corresponding to a substrate layer 530. The injection step S604 may be a step of forming the substrate layer 530 by injecting the resin into the injection mold on which the film layer 510 is seated. The details of each step will be described layer.

In FIGS. 6A and 6B, the forming step S602 is shown to be performed after the film patterning step S601, but the disclosure is not limited thereto, and an embodiment in which the forming step S602 is performed first and the film patterning step S601 is performed is also possible.

Referring to FIGS. 6A and 6B, in the manufacturing process of the housing plate 501, a rear shielding step S605 may be further performed after the injection step S604. The rear shielding step S605 may include a step of applying and curing a paint or an opaque resin on a surface of the housing plate 501 facing the inside of the electronic device and/or a step of forming a metal foil by a method such as vapor deposition.

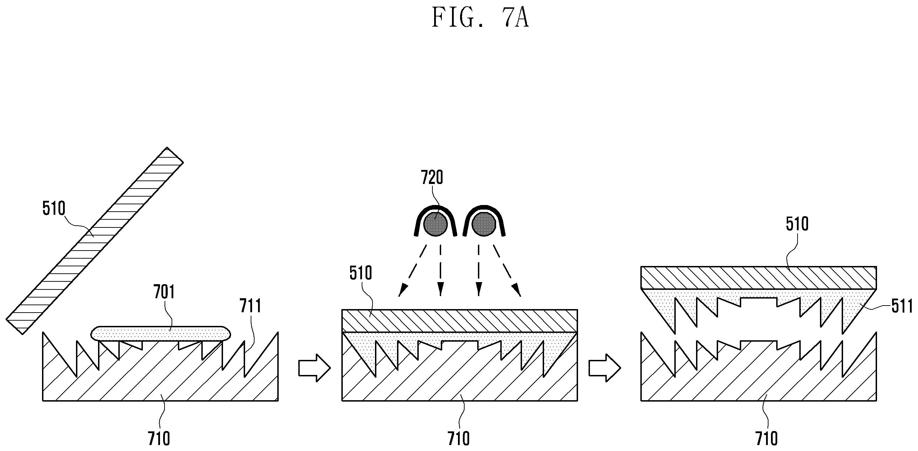

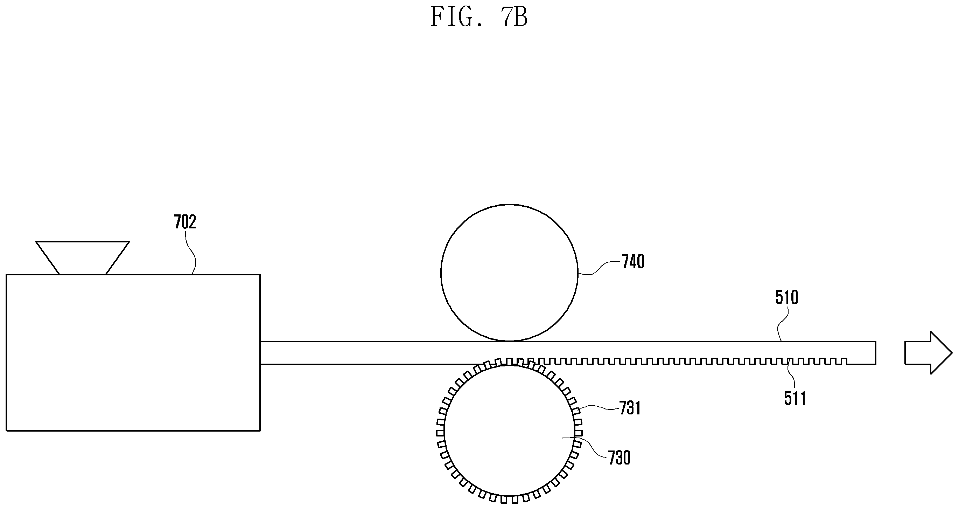

FIGS. 7A and 7B are schematic diagrams showing a film patterning step S601 according to various embodiments.

Referring to FIG. 7A, in various embodiments, the film patterning step S601 may include a step of applying a resin 701 to a film mold 710, a step of seating the film layer 510 on the film mold 710 and then curing the resin 701, and a step of separating the film layer 510 from the film mold 710. The mold may include a first mold pattern 711 formed on a surface facing the first surface 512 on which the first optical pattern 511 is formed in the film and having a negative shape of the first optical pattern 511. The resin 701 may include various curable polymer materials such as UV curable resins and/or heat curable resins. In the step of curing the resin 701, in a state where the resin 701 is applied to the film mold 710 and the film layer 510 is seated on the film mold, the resin 701 may be cured to have a shape of the first optical pattern 511 by applying UV, thermal, and/or other curing elements depending on the type of the resin 701. When curing is completed, the film layer 510 may be separated from the film mold 710.

Referring to FIG. 7B, in various embodiments, the film patterning step S601 may include a step in which a first roll 730 press-fits the surface of the film layer 510 to form the first optical pattern 511. A roll pattern 731 having a negative shape of the first optical pattern 511 may be formed on a surface of the first roll 730. The first roll 730 may be disposed at the rear of a manufacturing apparatus for manufacturing the film layer 510, for example, an extruder 702, to form the first optical pattern 511 on the surface of the extruded film layer 510. In some embodiments, a second roll 740 configured to support the film layer 510 with respect to the first roll 730 may be disposed in the opposite direction of the first roll 730 based on the surface of the film layer 510.

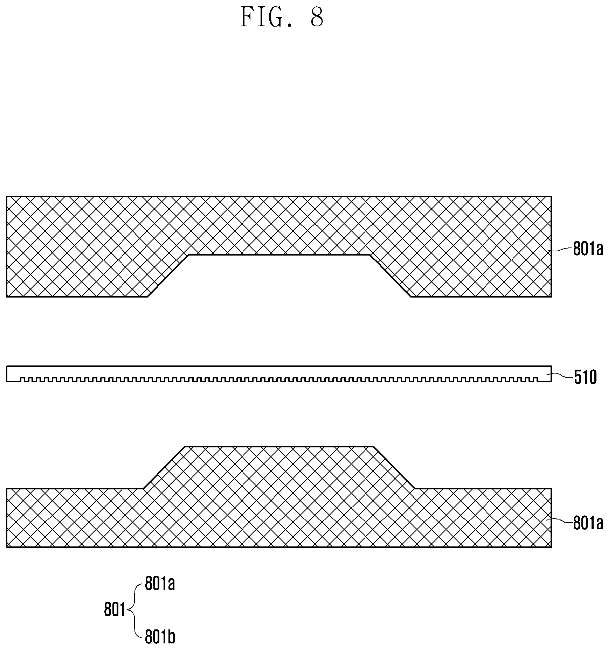

FIG. 8 is a schematic diagram showing a forming step S602 of a film layer 510 according to various embodiments.

Referring to FIG. 8, in the forming step S602, the film layer 510 may be inserted into a forming mold 801 to be molded to have a shape corresponding to the three-dimensional shape of the housing plate 501 which includes the protrusion part 502. The film layer 510 may be molded, for example, by pressing the film layer 510 between multiple forming molds 801a and 801b (801), or a method such as a gas pressure forming or a hydraulic forming may be used to form the film layer 510 according to the shape of the mold by vacuuming the film layer 510 on one side of the forming mold 801 and pressurizing the high-pressure fluid on the other side.

The film layer 510 has a higher hardness than the substrate layer 530, but is thinner than the substrate layer. Accordingly, compared to the case of forming the entire plate including the substrate layer 530, the strain rate received by the film layer 510 in the forming step S602 of the disclosure may be low, and thus, it is less likely to suffer damage such as cracks or tears during forming, thereby reducing the appearance defects caused by cracks and/or tears.

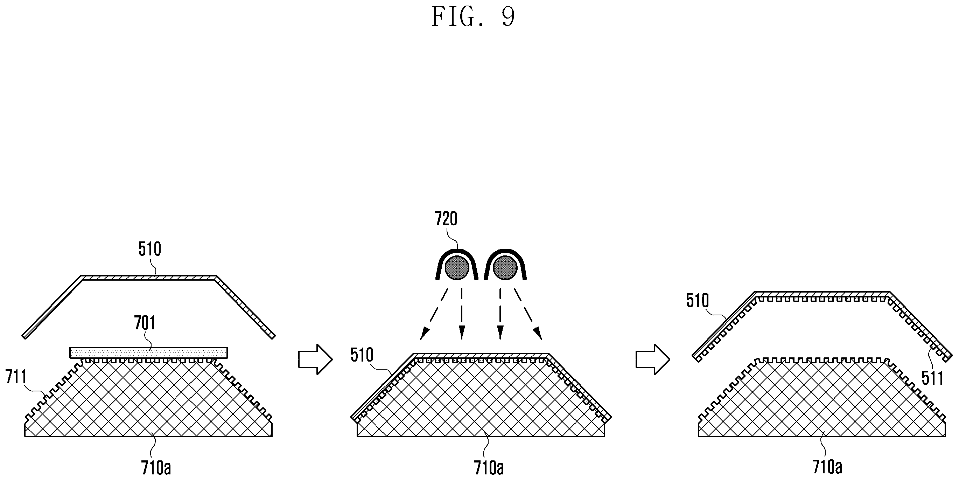

FIG. 9 is a schematic diagram showing a film patterning step S601 according to an embodiment of the disclosure.

Referring to FIG. 9, the film patterning step S601 may be performed after the forming step S602. A film mold 710a may have a first mold pattern 711 of which the surface has a negative shape of the first optical pattern 511, and may have a mold shape having a shape corresponding to the three-dimensional shape of the housing plate 501. The film layer 510, which is formed to have a three-dimensional shape in the forming step S602, may be seated on the film mold 710a while the resin 701 is applied to the film mold 710a, and a curing means (e.g., a UV light source 720) may be applied to the resin 701. After curing is completed, the film layer 510 on which the first optical pattern 511 is formed may be separated from the film mold 710a.

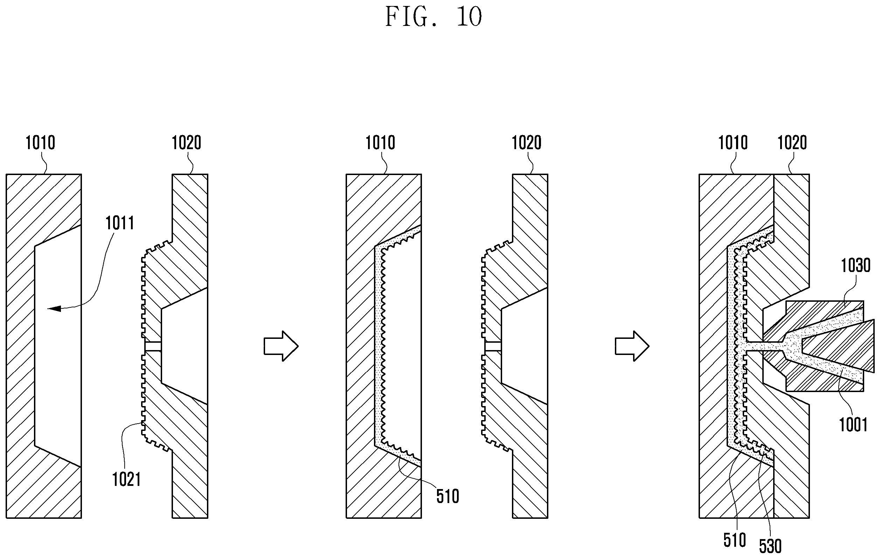

FIG. 10 is a schematic diagram showing an insert step S603 and an injection step S604 according to various embodiments of the disclosure.

Referring to FIG. 10, an injection mold may include a first mold and a second mold. The first mold may include a film seating part. The film seating part may be a portion where the film layer 510 which has completed the film patterning step S601 and the forming step S602 is seated to be in contact with the first mold so as to contact the surface opposite to the surface on which the first optical pattern 511 has been formed, for example, the surface forming the appearance. In some embodiments, the second mold may include a second mold pattern. The second mold pattern may be a pattern having a negative shape of the second optical pattern 531 of the substrate layer 530.

In the insert step S603, the film layer 510 may be seated on a seating part of the first mold. In the injection step S604, the first mold and the second mold may be coupled to each other, the substrate layer 530 may be formed by injecting a resin and/or molten polymer into a space between the first mold and the second mold through an injection nozzle and curing same, and the film and the substrate layer 530 may be bonded to each other.

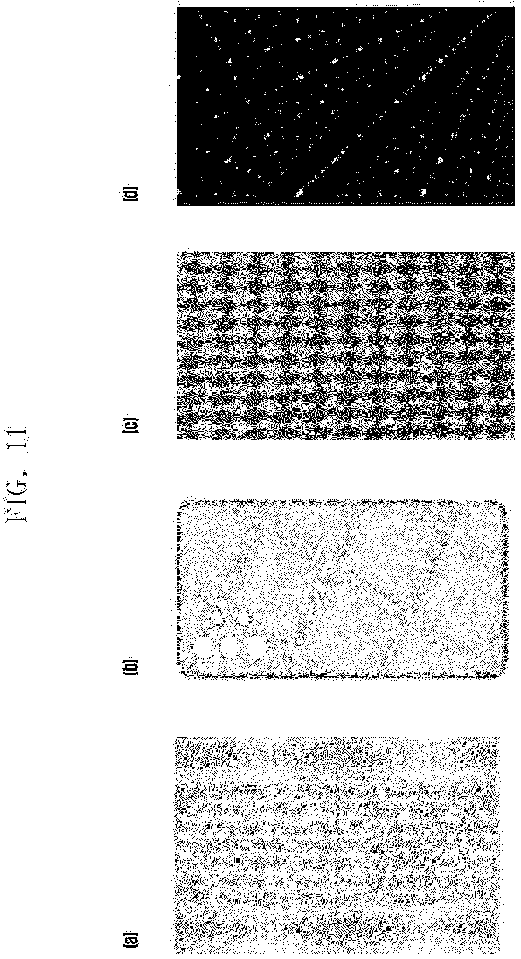

FIG. 11 is a plan view showing various optical effects that can be applied to a housing plate 501 of an electronic device according to various embodiments.

Referring to FIG. 11, various optical effects may occur due to the interaction of the first optical pattern 511 formed on the film layer 510 and the second optical pattern 531 formed on the substrate layer 530. For example, a lens distortion effect on a pattern (a), a stereo effect that gives the pattern a sense of volume or three-dimensionality (b), a holographic effect that forms various colors and/or images depending on the angle (c), and an effect that gives the pattern a sense of depth (d) may occur. These optical effects can give a unique aesthetic to the appearance of an electronic device.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure.

## Claims

1. An electronic device comprising a housing,
wherein the housing comprises:
a substrate layer having a 3D shape including at least one protrusion; and
a film layer located on a surface of the substrate layer facing the outside of the electronic device and having a higher hardness compared to the substrate layer, and
wherein the hard film layer comprises a first optical pattern formed on a first surface facing a first direction which is an internal direction of the electronic device.

2. The electronic device of claim 1, wherein the hardness of the film layer is HB or higher.

3. The electronic device of claim 1, wherein the substrate layer comprises a second optical pattern formed on a second surface of the substrate layer facing the first direction.

4. The electronic device of claim 3, wherein the substrate layer comprises a transparent polymer material, and
wherein the electronic device further comprises a rear shielding layer located in the first direction with respect to the second surface of the substrate layer and having an optically opaque material.

5. The electronic device of claim 3, wherein the first optical pattern and the second optical pattern are different from each other.

6. The electronic device of claim 3, wherein the substrate layer is manufactured by injecting a polymer into a mold,
wherein the mold comprises a second mold pattern formed on a surface of the mold corresponding to the second surface of the substrate layer and having a negative shape of the second optical pattern, and
wherein the second optical pattern of the substrate layer is formed by injecting a polymer into the mold comprising the second mold pattern.

7. The electronic device of claim 1, comprising a resin layer located between the film layer and the substrate layer and having a refractive index different from that of the film layer.

8. A method for manufacturing a housing of an electronic device, the method comprising:
a film patterning operation of forming a first optical pattern on a first surface facing a first direction of a film layer;
a forming operation of forming the film layer into a three-dimensional shape;
an insert operation of seating the film layer in an injection mold; and
an injecting operation of forming a substrate layer bonded to the film layer by injecting a resin into the injection mold.

9. The method of claim 8, wherein the film patterning operation comprises a operation of forming the first optical pattern on the first surface of the film layer by press-fitting the first surface of the film layer with a first roll having a roll pattern of which the surface has a negative shape of the first optical pattern.

10. The method of claim 8, wherein the film patterning operation comprises a operation in which the resin is applied on a film mold on which a first mold pattern having a negative shape of the first optical pattern is formed, and the resin is cured while the film layer is seated on the film mold, thereby forming the first optical pattern on the surface of the film layer, and
wherein the resin is a UV curing resin.

11. The method of claim 8, wherein the forming operation is performed before the film patterning operation, and
wherein the film patterning operation is a operation in which a resin is applied on a film mold having a shape corresponding to a three-dimensional shape and contacting the first surface of the film layer, the film layer having completed the forming operation is seated in the film mold, and the resin is cured to form the first optical pattern.

12. The method of claim 8, wherein the injection operation is configured to form a second optical pattern on the second surface of the substrate layer, which is the surface facing the first direction.

13. The method of claim 12, wherein the injection mold comprises:
a first mold having a film seating portion on which a surface opposite to the first surface of the film layer is seated; and
a second mold comprising a second mold pattern having a negative shape of the second pattern, and
wherein the second mold pattern is configured such that the second optical pattern has a pattern different from the first optical pattern.

14. The method of claim 8, wherein the polymer comprises a transparent polymer material, and
wherein after the injection operation, a rear shielding operation of applying an opaque material on a surface of the substrate layer facing the first direction is performed.

15. An apparatus for manufacturing a housing of an electronic device, the housing comprising a substrate layer having a three-dimensional shape comprising at least one protrusion, and a film layer located on a surface of the substrate layer facing the outside of the electronic device and having a higher hardness compared to the substrate layer, wherein the hard film layer comprises a first optical pattern formed on a first surface facing a first direction which is an internal direction of the electronic device and the substrate layer comprises a second optical pattern formed on a second surface of the substrate layer facing the first direction,
the apparatus comprising:
a first mold having a film seating portion on which a surface opposite to the first surface of the film layer is seated; and
a second mold comprising a second mold pattern having a negative shape of the second pattern.
